# EUROPEAN PATENT APPLICATION

(11) **EP 2 813 415 A1**
(43) Date of publication of application: **17.12.2014**
(21) Application number: 14172235.5
(22) Date of filing: 12.06.2014
(51) Int. Cl.: B62D 6/00, B60W 10/20

(54) **Steering wheel control system for a vehicle**

(30) Priority: 13.06.2013 GB 201310495
(71) Applicant: Nissan Motor Manufacturing (UK) Ltd., Cranfield Bedfordshire MK43 0DB (GB)
(72) Inventor: Mateu, Joan, Barcelona 08040 (ES)

(57) **Abstract**

A method of adapting the behaviour of a steering wheel (603) within the steering system of a vehicle, the method comprising: receiving (310) at least one vehicle operating parameter; determining (320) a vehicle operating condition (250, 260) from the received at least one operating parameter, the vehicle operating condition being related to a vehicle adherence condition; outputting (330) a control signal (660, 760, 860), the control signal being arranged to adapt the behaviour of the steering wheel in response to the determined vehicle operating condition.

## Description

### Field of the invention

The present invention relates to a steering wheel control system for a vehicle. In particular, the present invention relates to a control method and associated control systems for adapting the behaviour of a steering wheel of a vehicle in dependence upon driving conditions.

### Background to the Invention

Over the past decades and as the number of vehicles per capita is constantly increasing, the enhancement of automobile safety has become imperative. To this end, various systems of passive and active safety have been developed. The term passive safety refers to systems that help protect passengers during a crash, whilst the term active safety refers to technology assisting in the prevention of a crash.

In the field of active safety, some of the most important developments have been in the field of braking technologies and include technologies such as the Anti-lock Braking System (ABS), Electronic Stability Control (ESC) and Traction Control Systems (TCS). ABS allows the wheels of a motor vehicle to maintain tractive contact with the road surface according to driver inputs during braking to prevent them from locking up and to avoid uncontrollable skidding. ECS and TCS are secondary functions of ABS, whose main role is to automatically apply braking to each wheel separately.

The above-mentioned systems are, however, reactive; they must first detect a problem before corrective action can be taken. They are only applicable when the driver has already entered an unsafe, uncontrollable situation and they are limited by a lack of information relating to the vehicle's operating conditions.

It is therefore an object of this invention to provide a model and system that substantially overcomes or mitigates the above problems and to enhance vehicle safety in a pro-active manner.

### Summary of the Invention

According to a first aspect of the present invention there is provided a method of adapting the behaviour of a steering wheel within the steering system of a vehicle, the method comprising: receiving at least one vehicle operating parameter; determining a vehicle operating condition from the received at least one operating parameter, the vehicle operating condition being related to a vehicle adherence condition; outputting a control signal, the control signal being arranged to adapt the behaviour of the steering wheel in response to the determined vehicle operating condition.

The present invention provides a method that seeks to avoid the driver of a vehicle reaching the limits of adherence by providing feedback to the driver through the behavioural response of the steering wheel.

According to the method of the present invention at least one vehicle operating parameter (or data relating to such an operating parameter) is received, e.g. the vehicle operating parameter may be measured via an onboard sensor and sent to a processing module on the vehicle such as an electronic control unit (ECU). This at least one operating parameter is then processed to determine a vehicle operating condition that is related to a vehicle adherence condition. A control signal to adapt the behaviour of the steering wheel may then be output.

By altering the behavioural response of the steering wheel the vehicle's driver is notified when the driving conditions are indicating that the situation is getting close to being uncontrollable. Adapting the behavioural response also allows the driver to operate the vehicle with more precision under such circumstances.

Specifically, knowledge of the slip angle experienced by the vehicle's wheels is important information that is not provided by current safety systems.

The slip angle corresponds to the angle between the vehicle's actual direction of travel and the direction that the tyre is actually pointing in, and is dependent on the lateral acceleration and normal load experienced by the wheel. There is a maximum slip angle over which the amount of lateral force on the tyre is significantly reduced, causing the wheel to lose traction (skidding), entering an uncontrollable, unsafe situation. If vehicle control systems had accurate knowledge of the slip angle they could predict, rather than react to uncontrollable situations, further enhancing vehicle safety by allowing the driver a larger margin for corrective moves.

Conveniently, the vehicle operating parameter may comprise one or more selected from: yaw rate; lateral acceleration; direction of travel of a rolling wheel; pointing direction of a rolling wheel. A sensor or sensors within the vehicle may detect one or more of such vehicle operating parameters and supply the measured parameters (or data related to the parameters) to the vehicle's engine control unit (ECU).

The step of determining a vehicle operating condition may comprise calculating the slip angle from the received vehicle operating parameter. Alternatively, or additionally, the step of determining a vehicle operating condition may comprise calculating the normalised lateral force on a rolling tyre from the received vehicle operating parameter.

The step of determining a vehicle operating condition may additionally comprise comparing the calculated slip angle/normalised lateral force to a threshold value such that the vehicle's adherence condition may be determined. The threshold value that the comparison is made against may be variable depending on the desired steering sensitivity/ driving behaviour.

In the event a threshold value has been exceeded, the method may further comprise generating a control signal arranged to adapt the behaviour of the steering wheel.

The step of determining a vehicle operating condition may comprise analysing the calculated slip angle/normalised lateral force and the method may further comprise generating a control signal arranged to adapt the behaviour of the steering wheel that varies as the calculated slip angle/normalised lateral force varies. The behaviour of the steering wheel may therefore be arranged to be adapted continuously as the vehicle operating condition varies.

Alternatively, the behaviour of the steering wheel may be changed in discrete amounts by determining that the vehicle operating condition falls within one or more predefined regions of vehicle operation. That is to say that the step of determining a vehicle operating condition may comprise allocating the calculated slip angle/normalised lateral force to a predefined region of vehicle operation, the allocated region being used as the vehicle operating condition.

Each predefined region may be associated with a predetermined change in behaviour of the steering wheel and the method may further comprise generating the control signal to adapt the behaviour of the steering wheel in response to the predetermined region that is allocated.

The control signal may be output to one of the following: a power steering pump within a steering arrangement of the vehicle; a reduction gear and motor within the steering arrangement of the vehicle; an actuation motor and a steering wheel electric motor within a "drive by wire" steering arrangement of the vehicle.

The control signal may be arranged to increase the torque required to turn the steering wheel through a given angle.

According to a second aspect of the present invention there is provided a control module arranged to adapt the behaviour of a steering wheel within the steering system of a vehicle, the module arranged to: receive at least one vehicle operating parameter; determine a vehicle operating condition from the measured at least one operating parameter, the vehicle operating condition being related to vehicle adherence conditions; output a control signal, the control signal being arranged to adapt the behaviour of the steering wheel in response to the determined vehicle operating parameter.

The present invention extends to an electronic control unit of a vehicle comprising a control module according to the second aspect of the present invention and a vehicle comprising a control module according to the second aspect of the present invention.

It will be appreciated that any of the preferred and/or optional features of the first aspect of the invention can be incorporated alone or in appropriate combination in the second aspect of the invention also.

### Brief Description of the Drawings

In order for the invention to be better understood, reference will be made, by way of example, to the accompanying drawings in which:
Figure 1 is a representation of a steering wheel angle versus steering wheel torque profile in a known vehicle system;
Figure 2 is a schematic overview of the forces on a tyre;
Figure 3 is a flow chart of a steering wheel control method in accordance with an embodiment of the present invention;
Figure 4 is a representation of the normalised lateral force versus slip angle for a cornering tyre showing three regions of work in accordance with an embodiment of the present invention;
Figure 5 is a representation of a steering wheel torque versus steering wheel angle profile in a vehicle system in accordance with an embodiment of the present invention;
Figures 6 to 8 show three different vehicle arrangements for providing the steering wheel control method of Figure 3.

### Detailed Description of the exemplary embodiments

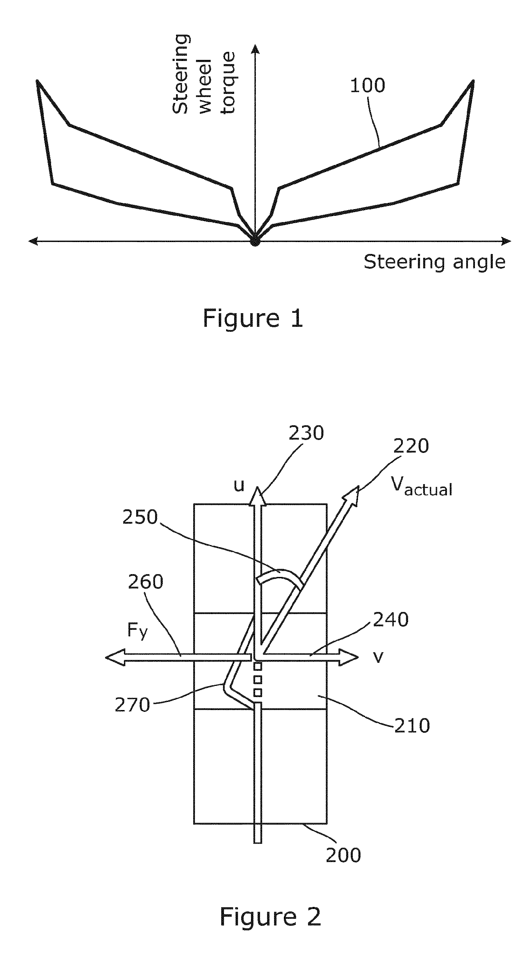

Figure 1 shows a representation within a known vehicle system of the torque that a driver of a vehicle exerts on a steering wheel as they control the vehicle versus the steering angle of the vehicle. It can be seen that the graph trace 100 is symmetrical about the *y* axis to indicate that the steering wheel and vehicle response is the same when turning both to the left and to the right.

Figure 2 is a schematic view of a tyre 200 in a vehicle that is cornering. The portion of the tyre in contact with the ground is indicated by a contact patch 210. The figure shows the rolling wheel's actual direction of travel 220 (v_{actual}) and the direction 230 that the tyre is actually pointing in, also labelled *u* in Figure 2. The tyre experiences a lateral velocity component 240 (v).

The slip angle 250 is defined by the difference between *v_{actual}* and *u* (difference between 220 and 230). The slip angle results in a force parallel to the vehicle axis, the lateral force *Fy* 260. The component of the force perpendicular to the wheel's direction of travel is the cornering force.

A non-zero slip angle arises due to deformation of the tyre and tyre treads. Figure 2 therefore also shows the deflected tread path 270 for a cornering vehicle.

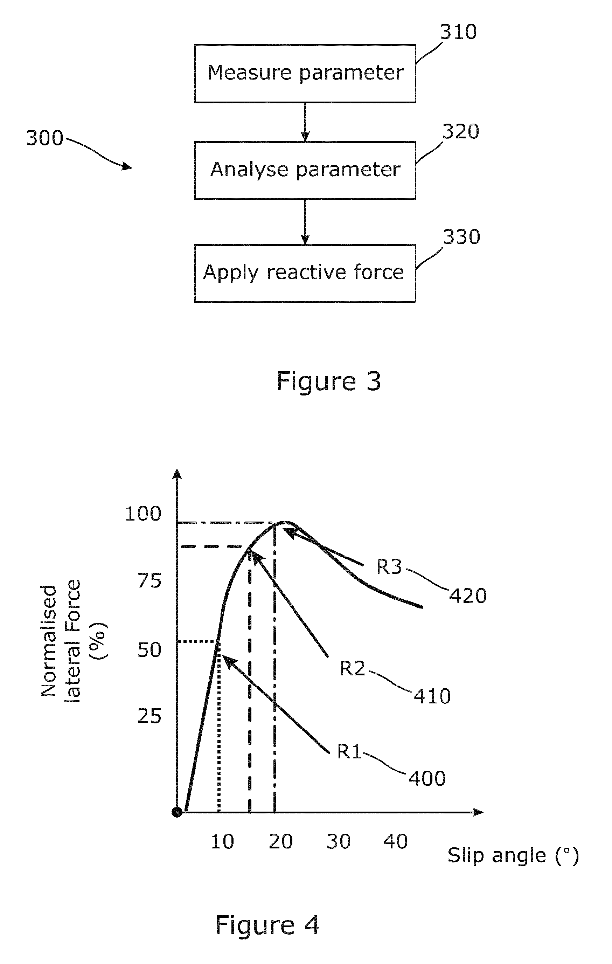

Figure 3 is a flow chart 300 detailing a method of controlling the behaviour of a steering wheel in response to vehicle driving conditions in accordance with an embodiment of the present invention.

In Step 310 at least one operational parameter of the vehicle is measured and then input into a control module within a vehicle system (the at least one operational parameter is received by the control module). As detailed below one or more of the following parameters may be measured: yaw rate of vehicle, lateral acceleration of the vehicle, steering wheel angle, steering wheel torque.

In Step 320 the at least one operational parameter is used to determine a vehicle operating condition that is related to vehicle adherence conditions. As detailed below, the slip angle of the steering tyres of the vehicle may be determined from the operational parameter measured in Step 310.

In Step 330 the behavioural response of the steering wheel may be altered in response to the determined vehicle operating condition. For example, the behaviour of the steering wheel may be changed by making the steering wheel more difficult to turn.

The method detailed in the flow chart of Figure 3 provides a method of adapting the behaviour of a vehicle's steering wheel in response to vehicle operating conditions. The system may therefore effectively detect when the vehicle is approaching a limit of tyre adherence and alter the response of the steering wheel to further driver input. Such adaptive behaviour of the steering wheel may allow the driver to operate the steering wheel with more precision as the vehicle approaches an over-steer, under-steer or slide condition.

Lateral grip limits of a vehicle are important to vehicle handling. For example, vehicle under-steer characterises how much the driver needs to change the steering input to maintain a constant radius as the vehicle speed is increased. When the friction forces saturate the front tyres before they do so at the rear, the car stops responding to steering inputs and under-steers. When the friction forces saturate for the rear tyres first, the car over-steers and may become unstable.

Formal definitions for the under-steer, over-steer and neutral steer conditions may be found in Gillespie, T. D. (1992). Chapter 6, Steady-State Cornering. Fundamentals of Vehicle Dynamics (pp. 202-204). USA: Society of Automotive Engineers:
1) Neutral Steer:
   On a constant-radius turn, no change in steer angle will be required as the speed is varied. Specifically, the steer angle required to make the turn will be equivalent to the Ackerman Angle. Physically, the neutral steer case corresponds to a balance on the vehicle such that the "force" of the lateral acceleration at the centre of gravity causes an identical increase in slip angle at both the front and rear wheels.
2) Under-steer:
   On a constant-radius turn, the steer angle will have to increase with speed in proportion to under-steer gradient, K (deglg) times the lateral acceleration in g's. Thus it increases linearly with the lateral acceleration and with the square of the speed. In the under-steer case, the lateral acceleration at the centre of gravity causes the front wheels to slip sideways to a greater extent than at the rear wheels. Thus to develop the lateral force at the front wheels necessary to maintain the radius of turn, the front wheels must be steered to a greater angle.
3) Over-steer:
   On a constant-radius turn, the steer angle will have to decrease as the speed (and lateral acceleration) is increased. In this case, the lateral acceleration at the centre of gravity causes the slip angle on the rear wheels to increase more than at the front. The outward drift at the rear of the vehicle turns the front wheels inward, thus diminishing the radius of turn. The increase in lateral acceleration that follows causes the rear to drift out even further and the process continues unless the steer angle is reduced to maintain the radius of turn.

Figure 4 shows a plot of normalised lateral force on the rolling tyre 200 of Figure 2 versus slip angle 250. In Figure 4, the lateral force (260 in Figure 2) is normalised with respect to the tyre's capacity (the force is normalised in this way because different tyres have different lateral force capacities, but what is important in terms of behaviour is what percentage of that capacity has been reached, rather than the absolute value of the lateral force applied). Three regions (regions R1, R2 and R3) corresponding to different vehicle operating conditions have been defined on Figure 4. It is to be appreciated that more or fewer regions may be defined based on a particular vehicle type or a given vehicle operating environment.

In the embodiment shown in Figure 4, region 1, 400, (R1) applies from the origin of the graph (i.e. vehicle and wheel both moving in the same direction) up to 10 degrees of slip angle 250 or 50% of the normalised lateral force.

Region 2, 410, (R2) applies from 10 degrees of slip (50% of the normalised lateral force) up to 15 degrees of slip angle 250 which corresponds to 80% of the normalised lateral force.

Region 3, 420, (R3) applies from 15 degrees of slip angle up to 20 degrees of slip angle 250 (which corresponds to 95% of the normalised lateral force).

It is noted that the boundaries of the regions defined above and the correspondence between the slip angle 250 and lateral force 260 may change with vehicle type/tyre type and the vehicle operating environment.. As such the skilled reader will appreciate that the regions discussed herein are by way of example only and may be varied, e.g. depending on vehicle type, depending on vehicle set up (e.g. sport, cruise), or driving conditions (e.g. road surface type, weather conditions, temperature conditions etc.).

In particular, the different regions could be tuned up or down to provide, e.g. increase in the sensitivity/dynamic "feel" of the vehicle handling, enabling it to be driven closer to the edge, or conversely, to provide a less dynamic steering feel.

It is also noted that the present invention seeks to avoid the driver reaching the limits of adherence, or at least to provide feedback to the driver via the steering response that he is getting close to the limit.

The present invention is operable to alter the behavioural response characteristic of the steering wheel in response to differing vehicle operating conditions. In the embodiment of Figure 4 the steering wheel behaviour may be controlled as follows:
- Within region 1, 400, (R1) the steering wheel behaviour is set to a standard response condition (in other words the steering wheel responds as per the profile of Figure 1);
- Within region 2, 410, (R2) the behavioural response of the steering wheel may be altered such that the torque required to produce a given steering wheel angle response is increased by approximately 10-15%. In other words the driver of the vehicle experiences a steering wheel that is "stiffened" compared to the behaviour within region 1;
- Within region 3, 420, (R3) the behavioural response of the steering wheel is further altered such that the torque required to produce a given steering wheel angle response is increased (relative to the standard wheel response condition) by 20-25%. The steering wheel thus will feel even stiffer to the driver than in region 2.

Referring again to the method shown in Figure 3, a control system for a vehicle may in Step 310 measure an operational parameter of the vehicle. In the context of the embodiment of Figure 4 this operational parameter may be the slip angle (250, as shown in Figure 2) or the normalised lateral force (260, as shown in Figure 2). In Step 320 the control system may determine the vehicle operating condition, in other words the control system may determine if the vehicle is currently within operating region 1, 2 or 3. In Step 330 the behavioural response of the steering wheel may be altered to result in a "stiffer" steering wheel response as the vehicle operating condition moves from region 1 (labelled 400 in Figure 4) to region 2 (labelled 410 in Figure 4) and then onto region 3 (labelled 420 in Figure 4).

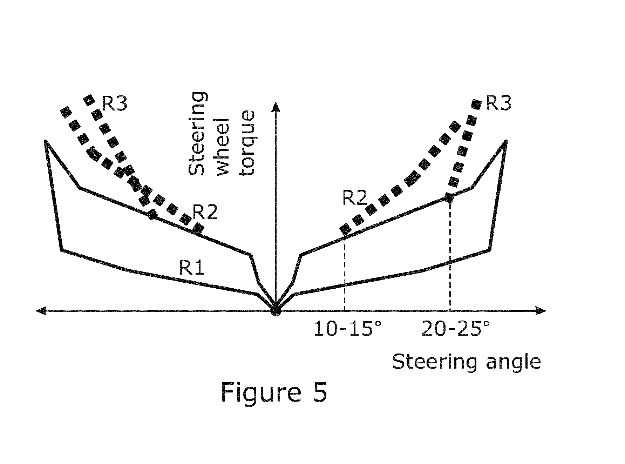

Figure 5 is a representation of a steering wheel torque versus steering wheel angle profile in a vehicle system operating in accordance with an embodiment of the invention. Figure 5 is similar to that shown in Figure 1, however in Figure 5 the modification of the steering wheel behaviour within regions R2 (labelled 410 in Figure 4) and R3 (labelled 420 in Figure 4) is shown via the dotted lines. It can be seen that as the vehicle enters region 2 (labelled 410 in Figure 4) the gradient of the torque versus angle line increases, which indicates that a greater torque needs to be input to the steering wheel (compared to region 1, labelled 400 in Figure 4) to provoke a given steering wheel angle change. Similarly, the gradient in region 3 (420) is greater than region 2 (410).

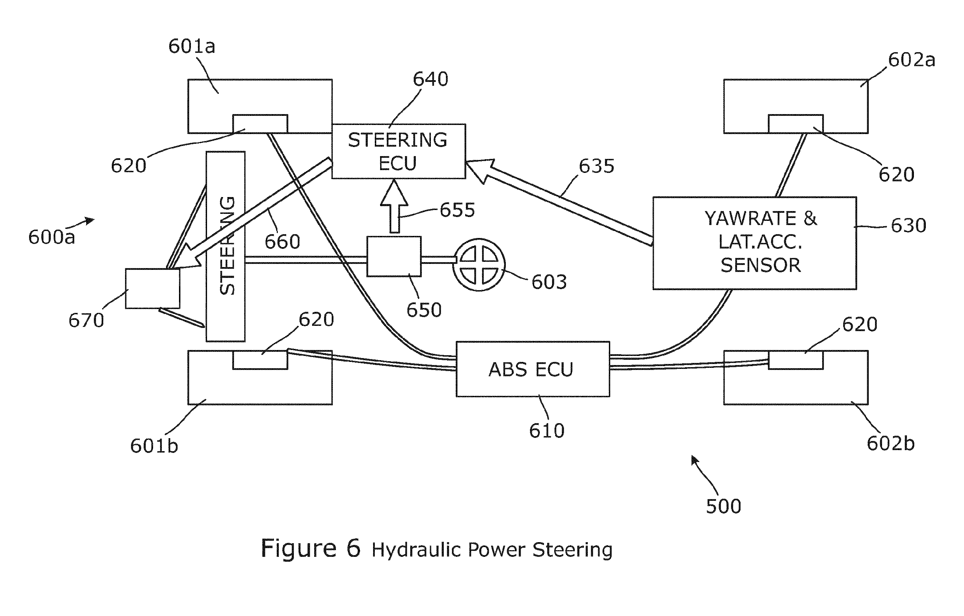

Figures 6 to 8 show different vehicle steering wheel control systems in accordance with embodiments of the present invention.

Turning to Figure 6 a schematic representation of the steering system 600a of a vehicle 500 is shown. The vehicle comprises four tyres, 601 a, 601 b, 602a, 602b, the front two of which (601a, 601b) are controlled by a hydraulic steering arrangement 600a in communication with a steering wheel 603.

The vehicle comprises an electronic control unit (ECU) 610 for an anti-lock braking system (ABS) which is in communication with the braking system within each wheel. The braking system comprises a brake and wheel speed sensor mounted 620 within each wheel of the vehicle. The ABS ECU 610 is also in communication with a sensor 630 that measures vehicle yaw rate and lateral acceleration and is arranged to process the sensor output in order to determine when to apply the ABS (or vehicle dynamics control (VDC)) function in a braking scenario.

The vehicle of Figure 6 further comprises a steering electronic control unit (steering ECU) 640. The steering ECU 640 receives input 635 from the yaw rate/acceleration sensor 630 and also an input 655 from a steering wheel angle/torque sensor 650 in communication with the steering wheel 603 so that driver input via the steering wheel can be measured.

The steering ECU 640 comprises an output 660 to the hydraulic steering arrangement. In this manner the response of the steering wheel 603 can be altered.

In more detail, and in accordance with the method shown in Figure 3, the steering system of Figure 6 operates as follows:
- In Step 310 the steering ECU 640 receives at least one operational parameter (yaw rate and/or lateral acceleration) from the yaw rate/lateral acceleration sensor 630;
- In Step 320 the steering ECU 600 determines a vehicle operating condition. This determining step may comprise determining the vehicle slip angle 250 from the at least one operational parameter received in Step 310 and from the determined slip angle determining the vehicle operating condition, e.g. which of regions 1, 2 or 3 the vehicle is currently operating in;
- In Step 330 the steering ECU 640 outputs a control signal 660 to a power steering pump 670 (with servo valve) within the steering arrangement to increase or decrease the pressure within the hydraulic system in order to change the behavioural response of the steering wheel 603.

Methods to measure slip angle fall into two categories: either they measure in the vehicle's co-ordinate frame or they measure in an earth-based co-ordinate frame, i.e. optical based, or GPS based respectively. These methods measure the forward and lateral velocities directly and can compute the slip angle according to ISO8855, which defines the slip angle as: Slip angle = β = arctan(Vy/Vx); where Vy and Vx are the lateral (left) and longitudinal (forward) velocities of the vehicle.

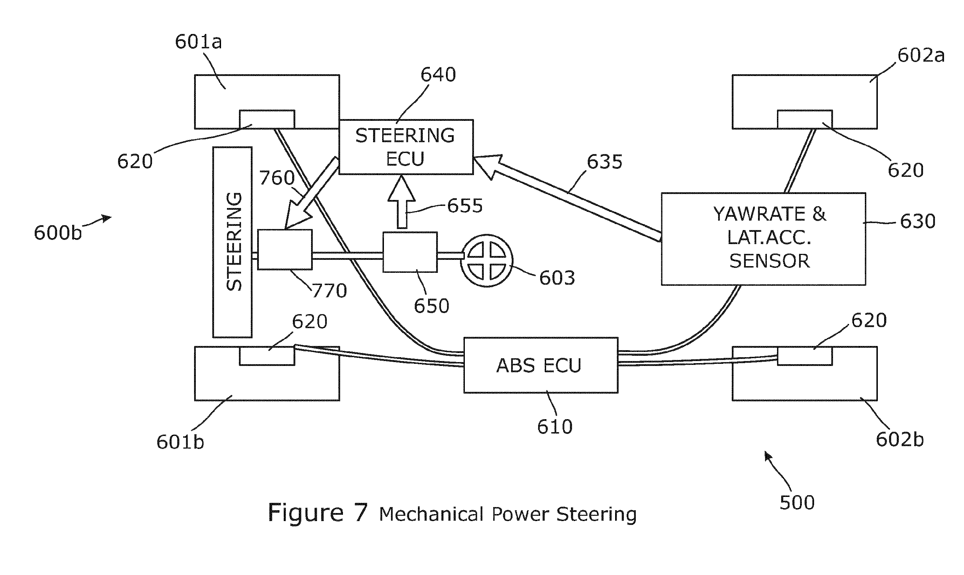

Turning to Figure 7 a further schematic representation of the steering system 600b of a vehicle 500 is shown. The vehicle comprises four tyres, 601 a, 601 b, 602a, 602b, the front two of which (601 a, 601 b) are controlled by a mechanical power steering arrangement 600b in communication with a steering wheel 603.

The vehicle control system of Figure 7 comprises a yaw rate and lateral acceleration sensor 630 as described in relation to Figure 6. The system of Figure 7 also comprises an anti-lock braking system (including brake and wheel sensors 620 and ABS ECU 610) as described in relation to Figure 6 the operation of which is as per the arrangement described above.

The system of Figure 7 also comprises a steering electronic control unit 640 that in this vehicle arrangement outputs a control signal 760 to a reduction gear and motor arrangement 770 that in turn controls the operation of the mechanical power steering system 600b. The steering ECU 640 again receives an input 635 from the yaw rate sensor 630 and an input 655 from a steering wheel angle/torque sensor 650.

In more detail, and in accordance with the method shown in Figure 3, the steering system of Figure 7, operates as follows:
- In Step 310 the steering ECU 640 receives at least one operational parameter (yaw rate and/or lateral acceleration) from the yaw rate/lateral acceleration sensor 630;
- In Step 320 the steering ECU 640 determines a vehicle operating condition. This determining step may comprise determining the vehicle slip angle 250 from the at least one operational parameter received in Step 310 and from the determined slip angle determining the vehicle operating condition, e.g. which of regions 1, 2 or 3 the vehicle is currently operating in;
- In Step 330 the steering ECU 640 outputs a control signal 760 to the reduction gear and motor 770 within the steering arrangement in order to change the behavioural response of the steering wheel 603.

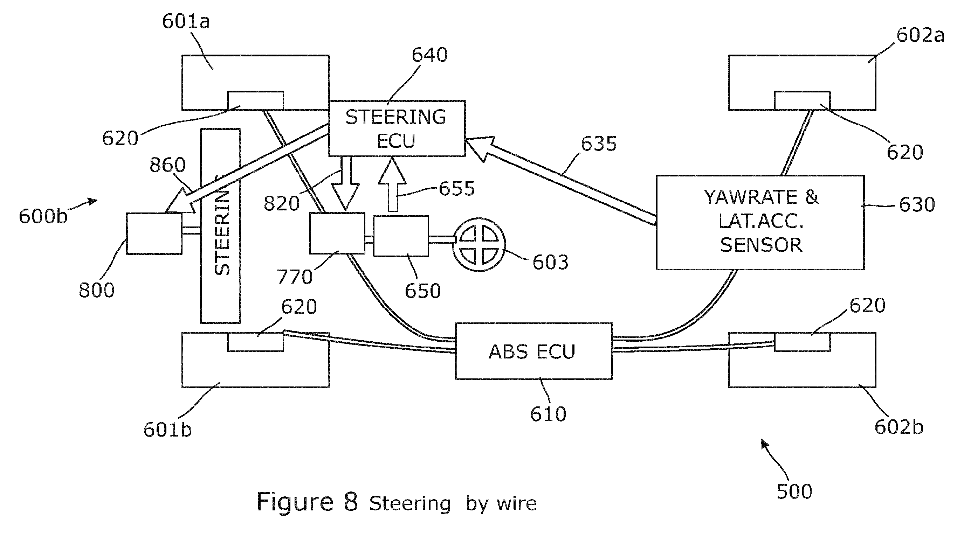

Turning to Figure 8 a further schematic representation of the steering system 600c of a vehicle 500 is shown. The vehicle comprises four tyres, 601 a, 601 b, 602a, 602b, the front two of which (601 a, 601 b) are controlled by a "steer by wire" steering arrangement 600c in communication with a steering wheel 603.

The vehicle control system of Figure 8 comprises a yaw rate and lateral acceleration sensor 630 as described in relation to Figure 6. The system of Figure 8 also comprises an anti-lock braking system (including brake and wheel sensors 620 and ABS ECU 610) as described in relation to Figure 6 the operation of which is as per the arrangement described above.

The system of Figure 8 comprises a steering electronic control unit 640 that in this vehicle arrangement outputs a control signal 860 to a steering actuation motor 800 that is in communication with the steering arrangement 600c in order to control the operation of the steering system. The steering ECU again receives an input 635 from the yaw rate sensor 630 and an input 655 from a steering wheel angle/torque sensor 650. The steering ECU 640 of Figure 8 also comprises a further output 820 to a steering wheel electric motor 810 that is used to provide steering feedback (i.e. a form of haptic feedback) to the driver of the vehicle through the steering wheel 603.

In more detail, and in accordance with the method shown in Figure 3, the steering system of Figure 8, operates as follows:
- In Step 310 the steering ECU (640) receives at least one operational parameter (yaw rate and/or lateral acceleration) from the yaw rate/lateral acceleration sensor 630;
- In step 320 the steering ECU determines a vehicle operating condition. This determining step may comprise determining the vehicle slip angle 250 from the at least one operational parameter received in step 310 and from the determined slip angle determining the vehicle operating parameter, e.g. which of regions 1, 2 or 3 the vehicle is currently operating in;
- In step 330 the steering ECU 640 outputs a control signal 860 to the actuation motor 800 within the steering arrangement and further outputs a further control signal 820 to the steering wheel electric motor 810 in order to change the behavioural response of the steering wheel 603.

In the description above the vehicle operating condition is determined by converting a measured or input vehicle operating parameter (e.g. yaw angle) into a slip angle that is then placed within a region of operation (region 1, 2 or 3). The behaviour of the steering wheel is then altered depending on the range that the vehicle is operating within. Within this context the vehicle operating condition is the "region" that is calculated.

It should be noted however that other vehicle operating conditions may be used to alter the steering wheel behaviour if such conditions may be linked to the vehicle adherence. For example, the steering ECU 640 may calculate the slip angle of the vehicle and directly use the slip angle as the vehicle operating condition. Alternatively, the ECU 640 may calculate normalised lateral force and use this as the vehicle operating condition. A further vehicle operating condition that may be used would be slip force.

Furthermore, instead of the discrete region method described above, the behaviour of the steering wheel may be changed in a continuous manner as the vehicle operating condition changes. As a further alternative the behaviour of the steering wheel may be changed as soon as the vehicle operating condition passes a pre-defined threshold level.

## Claims

1. A method of adapting the behaviour of a steering wheel (603) within the steering system of a vehicle, the method comprising:
receiving (310) at least one vehicle operating parameter;
determining (320) a vehicle operating condition (250, 260) from the received at least one operating parameter, the vehicle operating condition being related to a vehicle adherence condition;
outputting (330) a control signal (660, 760, 860), the control signal being arranged to adapt the behaviour of the steering wheel in response to the determined vehicle operating condition.

2. The method according to Claim 1, wherein the vehicle operating parameter comprises one or more selected from: yaw rate; lateral acceleration; direction of travel of a rolling wheel; pointing direction of a rolling wheel.

3. The method according to Claim 1 or 2, wherein the step of determining a vehicle operating condition comprises calculating slip angle (250) from the received vehicle operating parameter.

4. The method according to any preceding claim, wherein the step of determining a vehicle operating condition comprises calculating normalised lateral force (260) on a rolling tyre from the received vehicle operating parameter.

5. The method according to any preceding claim, wherein the step of determining a vehicle operating condition comprises comparing the calculated slip angle/normalised lateral force to a threshold value.

6. The method according to Claim 5, wherein the threshold value is variable depending on the desired steering sensitivity/ driving behaviour.

7. The method according to Claim 5 or Claim 6, wherein in the event a threshold value has been exceeded, the method further comprises generating the control signal (660, 760, 860) arranged to adapt the behaviour of the steering wheel.

8. The method according to any preceding claim, wherein the step of determining a vehicle operating condition comprises analysing the calculated slip angle/normalised lateral force and the method further comprises generating a control signal arranged to adapt the behaviour of the steering wheel that varies as the calculated slip angle/normalised lateral force varies.

9. The method according to any one of claims 1 to 7, wherein the step of determining a vehicle operating condition comprises allocating the calculated slip angle/normalised lateral force to a predefined region of vehicle operation, the allocated region being used as the vehicle operating condition.

10. The method according to Claim 9, wherein each predefined region is associated with a predetermined change in behaviour of the steering wheel, the method further comprising generating the control signal to adapt the behaviour of the steering wheel in response to the predetermined region that is allocated.

11. The method according to any preceding claim, wherein the control signal is output to one of the following: a power steering pump within a steering arrangement of the vehicle; a reduction gear and motor within the steering arrangement of the vehicle; an actuation motor and a steering wheel electric motor within a "drive by wire" steering arrangement of the vehicle.

12. The method according to Claim 11, wherein the control signal is arranged to increase the torque required to turn the steering wheel through a given angle.

13. A control module (640) arranged to adapt the behaviour of a steering wheel (603) within the steering system (600a) of a vehicle, the module arranged to:
receive at least one vehicle operating parameter;
determine a vehicle operating condition from the measured at least one operating parameter, the vehicle operating condition being related to vehicle adherence conditions;
output a control signal, the control signal being arranged to adapt the behaviour of the steering wheel in response to the determined vehicle operating parameter.

14. An electronic control unit (640) of a vehicle comprising a control module as claimed in 13.

15. A vehicle comprising a control module as claimed in Claim 13.
